# EUROPEAN PATENT APPLICATION

(11) **EP 4 654 342 A1**
(43) Date of publication of application: **26.11.2025**
(21) Application number: 25171189.1
(22) Date of filing: 17.04.2025
(51) Int. Cl.: H01M 50/103, H01M 50/528

(54) **SECONDARY BATTERY AND METHOD OF MANUFACTURING SAME**

(30) Priority: 20.05.2024 JP 2024081637
(71) Applicant: Prime Planet Energy & Solutions, Inc., Chuo-ku, Tokyo 103-0022 (JP)
(72) Inventor: HAGIMOTO, Yusuke, Tokyo 103-0022 (JP)
(74) Representative: Kuhnen & Wacker Patent- und Rechtsanwaltsbüro PartG mbB

(57) **Abstract**

A secondary battery includes: an electrode assembly (200); a case (100) that accommodates the electrode assembly (200), the case (100) including a case main body (110) provided with an opening and a sealing plate (120, 130); an electrode terminal (300); and a current collecting portion (400), wherein the current collecting portion (400) includes a first member (430) having electric conductivity, the first member (430) being joined to the electrode assembly (200), a second member (440) having electric conductivity, the second member (440) being fixed on an inner surface of the sealing plate, the second member (440) being joined to the electrode terminal (300), and a third member (460) having electric conductivity, the third member (460) being constituted of a member different from the first member (430) and the second member (440), the third member (460) electrically connecting the first member (430) and the second member (440).

## Description

### CROSS REFERENCE TO RELATED APPLICATIONS

This nonprovisional application is based on Japanese Patent Application No. 2024-081637 filed on May 20, 2024 with the Japan Patent Office, the entire contents of which are hereby incorporated by reference.

### BACKGROUND OF THE INVENTION

### Field of the Invention

The present technology relates to a secondary battery and a method of manufacturing the secondary battery.

### Description of the Background Art

Japanese Patent No. 4537353 discloses a prismatic secondary battery in which an electrode group (25) is accommodated in a case (14) provided with openings (14a, 14b) at both ends thereof and electrode terminals (21, 23) are respectively attached to cap plates (33, 33') that seal the openings (14a, 14b).

Each of Japanese National Patent Publication No. 2015-524148, Japanese National Patent Publication No. 2013-535774, and Japanese Patent Laying-Open No. 2018-77933 discloses that wire bonding or ribbon bonding is applied to electric connection in a battery.

### SUMMARY OF THE INVENTION

It has been required to improve energy density and reliability of a secondary battery. From these viewpoints, there is still room for improvement in conventional secondary batteries.

An object of the present technology is to provide a secondary battery having high energy density and high reliability and a method of manufacturing the secondary battery.

The present technology provides the following secondary battery and the following method of manufacturing the secondary battery.
[1] A secondary battery comprising: an electrode assembly including a positive electrode and a negative electrode; a case that accommodates the electrode assembly, the case including a case main body provided with an opening and a sealing plate that seals the opening; an electrode terminal provided on an outer surface of the sealing plate; and a current collecting portion that electrically connects the electrode assembly and the electrode terminal, wherein the current collecting portion includes a first member having electric conductivity, the first member being joined to the electrode assembly, a second member having electric conductivity, the second member being fixed on an inner surface of the sealing plate, the second member being joined to the electrode terminal, and a third member having electric conductivity, the third member being constituted of a member different from the first member and the second member, the third member electrically connecting the first member and the second member.
[2] The secondary battery according to [1], wherein the third member is constituted of a line-shaped member or strip-shaped member having electric conductivity.
[3] The secondary battery according to [1] or [2], wherein the case has a substantially rectangular parallelepiped shape.
[4] The secondary battery according to any one of [1] to [3], wherein the case main body is provided with a first opening and a second opening respectively located on both sides of the case main body in a first direction, the sealing plate includes a first sealing plate and a second sealing plate that respectively seal the first opening and the second opening, the electrode terminal includes a positive electrode terminal or a negative electrode terminal provided on an outer surface of one of the first sealing plate and the second sealing plate, and the current collecting portion is provided between the electrode assembly and the positive electrode terminal or the negative electrode terminal.
[5] The secondary battery according to any one of [1] to [4], wherein the third member has an electrical conduction area by which charging corresponding to 1 C is able to be permitted.
[6] The secondary battery according to any one of [1] to [5], wherein the third member is constituted of a single member.
[7] The secondary battery according to any one of [1] to [5], wherein the third member is constituted of a plurality of members.
[8] A method of manufacturing a secondary battery, the method comprising: inserting an electrode assembly including a positive electrode and a negative electrode into a case main body via an opening; providing an electrode terminal on an outer surface of a sealing plate; sealing the opening by the sealing plate; and electrically connecting the electrode assembly and the electrode terminal via a current collecting portion, wherein the electrically connecting the electrode assembly and the electrode terminal includes joining a first member to the electrode assembly, the first member having electric conductivity, fixing a second member on an inner surface of the sealing plate and joining the second member to the electrode terminal, the second member having electric conductivity, and electrically connecting the first member and the second member via a third member constituted of a member different from the first member and the second member, the third member having electric conductivity.
[9] The method of manufacturing a secondary battery according to [8], wherein the third member is constituted of a line-shaped member or strip-shaped member having electric conductivity.
[10] The method of manufacturing a secondary battery according to [8] or [9], wherein a case including the case main body and the sealing plate has a substantially rectangular parallelepiped shape.
[11] The method of manufacturing a secondary battery according to any one of [8] to [10], wherein the case main body is provided with a first opening and a second opening respectively located on both sides of the case main body in a first direction, the sealing plate includes a first sealing plate and a second sealing plate that respectively seal the first opening and the second opening, the electrode terminal includes a positive electrode terminal or a negative electrode terminal provided on an outer surface of one of the first sealing plate and the second sealing plate, and the current collecting portion is provided between the electrode assembly and the positive electrode terminal or the negative electrode terminal.
[12] The method of manufacturing a secondary battery according to any one of [8] to [11], wherein the electrically connecting the first member and the second member via the third member is performed after the electrode assembly is inserted into the case main body.
[13] The method of manufacturing a secondary battery according to any one of [8] to [12], wherein the third member has an electrical conduction area by which charging corresponding to 1 C is able to be permitted.
[14] The method of manufacturing a secondary battery according to any one of [8] to [13], wherein the third member is constituted of a single member.
[15] The method of manufacturing a secondary battery according to any one of [8] to [13], wherein the third member is constituted of a plurality of members.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to a first embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a front view showing a negative electrode raw plate before a negative electrode plate is formed.
Fig. 8 is a cross sectional view of the negative electrode raw plate shown in Fig. 7 along VIII-VIII.
Fig. 9 is a front view showing the negative electrode plate formed from the negative electrode raw plate.
Fig. 10 is a front view showing a positive electrode raw plate before a positive electrode plate is formed.
Fig. 11 is a cross sectional view of the positive electrode raw plate shown in Fig. 10 along XI-XI.
Fig. 12 is a front view showing the positive electrode plate formed from the positive electrode raw plate.
Fig. 13 is a cross sectional view of the secondary battery shown in Fig. 1 along XIII-XIII.
Fig. 14 is a cross sectional view of the secondary battery shown in Fig. 1 along XIV-XIV.
Fig. 15 is a flowchart showing a method of manufacturing the secondary battery according to the first embodiment.
Fig. 16 is a perspective view showing a state before two electrode assemblies included in the secondary battery according to the first embodiment are overlapped with each other.
Fig. 17 is a cross sectional view of each of the electrode assemblies and the current collectors shown in Fig. 16 along XVII-XVII.
Fig. 18 is a perspective view showing a state of attaching a holder and a spacer to the electrode assembly.
Fig. 19 is a perspective view showing a state of attaching a sealing plate to current collectors on the negative electrode side.
Fig. 20 is a cross sectional view of each of the electrode assemblies and the current collectors shown in Fig. 19 along XX-XX.
Fig. 21 is a perspective view showing a state of inserting the electrode assemblies into the case main body.
Fig. 22 is a perspective view showing a state of attaching a sealing plate to current collectors on the positive electrode side.
Fig. 23 is a cross sectional view of each of the electrode assemblies and the current collectors shown in Fig. 22 along XXIII-XXIII.
Fig. 24 is a diagram showing a state in which the current collectors shown in Fig. 22 are viewed in a direction of arrow XXIV.
Fig. 25 is a cross sectional view of the current collectors shown in Fig. 24 along XXV-XXV.
Fig. 26 is a perspective view showing a configuration of the secondary battery according to the first embodiment.
Fig. 27 is a cross sectional view showing a configuration of a secondary battery according to a second embodiment.
Fig. 28 is a perspective view showing a configuration of each of current collectors included in a secondary battery according to a third embodiment.
Fig. 29 is a cross sectional view of the current collectors shown in Fig. 28 along XXIX-XXIX.
Fig. 30 is a perspective view showing a configuration of each of current collectors included in a secondary battery according to a fourth embodiment.
Fig. 31 is a cross sectional view of the current collectors shown in Fig. 30 along XXXI-XXXI.
Fig. 32 is a perspective view showing a configuration of each of current collectors included in a secondary battery according to a fifth embodiment.
Fig. 33 is a cross sectional view of the current collectors shown in Fig. 32 along XXXIII-XXXIII.
Fig. 34 is a perspective view showing a configuration of each of current collectors included in a secondary battery according to a sixth embodiment.
Fig. 35 is a cross sectional view of the current collectors shown in Fig. 34 along XXXV-XXXV.
Fig. 36 is a cross sectional view showing a configuration of each of current collectors included in a secondary battery according to a seventh embodiment.
Fig. 37 is a first top view showing an exemplary configuration of a connection member.
Fig. 38 is a side view of a structure shown in Fig. 37.
Fig. 39 is a second top view showing an exemplary configuration of the connection member.
Fig. 40 is a side view of a structure shown in Fig. 39.
Fig. 41 is a third top view showing an exemplary configuration of the connection member.
Fig. 42 is a side view of a structure shown in Fig. 41.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" is not limited to a lithium ion battery, and may include other secondary batteries such as a nickel-metal hydride battery and a sodium-ion battery. In the present specification, the term "electrode" may collectively represent a positive electrode and a negative electrode.

It should be noted that in each of the figures, the X direction is defined to represent a direction along a winding axis of an electrode assembly included in the secondary battery, the Y direction is defined to represent a short-side direction of the electrode assembly when viewed in the X direction, and the Z direction is defined to represent a long-side direction of the electrode assembly when viewed in the X direction. Further, in order to facilitate understanding of the invention, the size of each configuration in the figures may be illustrated to be changed from its actual size.

In the specification of the present application, the first direction (X direction) may be referred to as a "width direction" of the secondary battery or the case main body, the second direction (Y direction) may be referred to as a "thickness direction" of the secondary battery or the case main body, and the third direction (Z direction) may be referred to as a "height direction" of the secondary battery or the case main body.

### (First Embodiment)

Hereinafter, a secondary battery 1 according to a first embodiment will be described.

### (Overall Configuration of Battery)

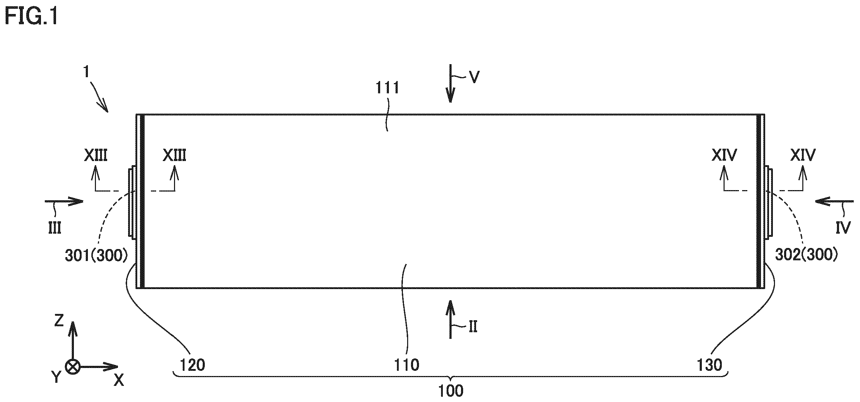

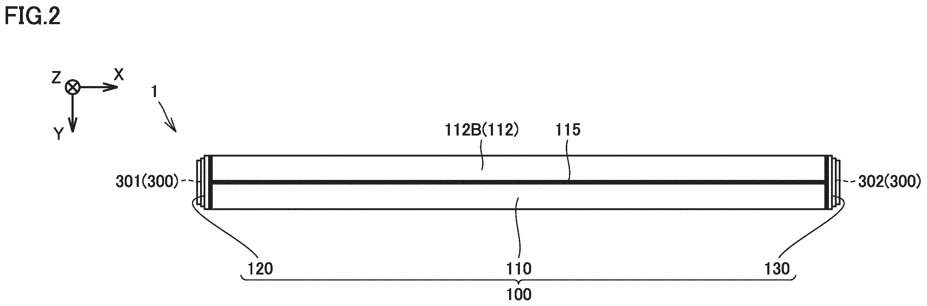

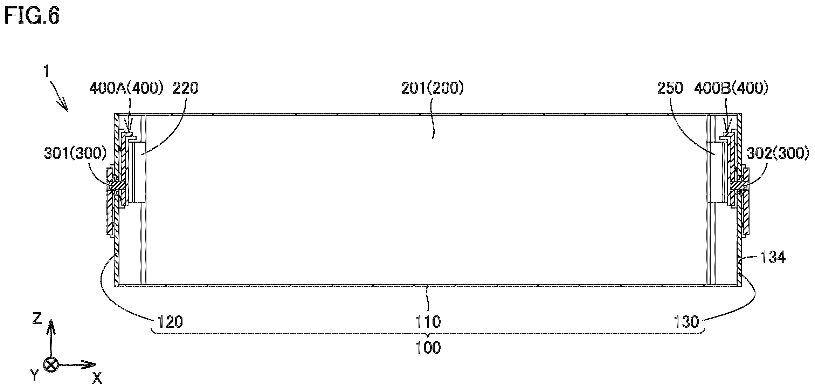

Fig. 1 is a front view of a secondary battery 1 according to the present embodiment. Figs. 2 to 5 are diagrams showing states of secondary battery 1 shown in Fig. 1 when viewed in directions of arrows II, III, IV, and V respectively. Fig. 6 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 6, secondary battery 1 includes a case 100, an electrode assembly 200, electrode terminals 300, and current collectors 400. Case 100 includes a case main body 110, a sealing plate 120, and a sealing plate 130.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, sealing plate 120 (second wall) and sealing plate 130 (first wall) are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

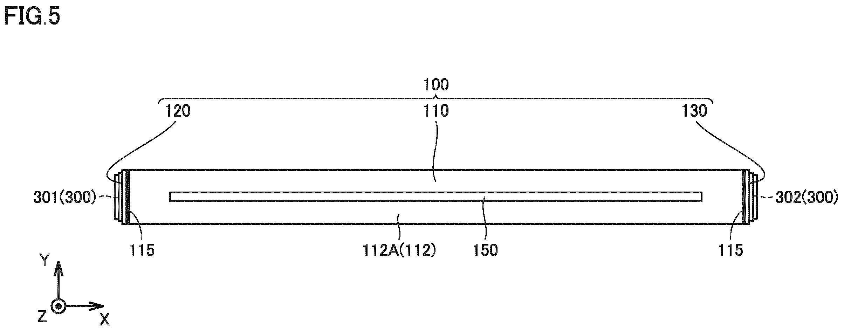

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. Gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member constituting case main body 110 are joined to each other.

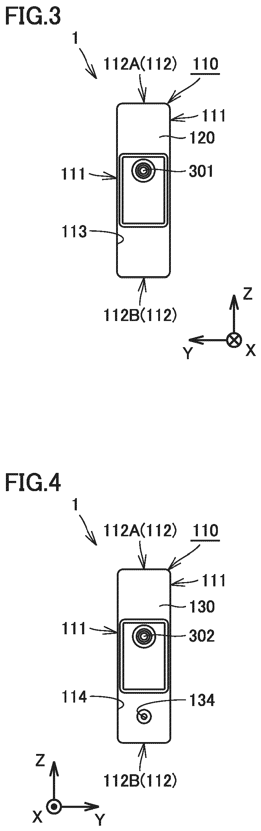

As shown in Fig. 3, an opening 113 (second opening) is provided at an end portion of case main body 110 on a first side in the first direction (X direction). Opening 113 is sealed by sealing plate 120. Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. It should be noted that the substantially rectangular shape includes a rectangular shape or a generally rectangular shape such as a rectangular shape having corners each with a curvature.

Sealing plate 120 (second sealing plate) is provided with a negative electrode terminal 301. The position of negative electrode terminal 301 can be appropriately changed.

As shown in Fig. 4, an opening 114 (first opening) is provided at an end portion of case main body 110 on a second side opposite to the first side in the first direction (X direction). That is, opening 114 is located at an end portion opposite to opening 113, and openings 113, 114 face each other. Opening 114 is sealed by sealing plate 130. Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 (first sealing plate) is provided with a positive electrode terminal 302 and an injection hole 134. The positions of positive electrode terminal 302 and injection hole 134 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 (second electrode terminal) is electrically connected to a negative electrode of electrode assembly 200. Negative electrode terminal 301 is attached to sealing plate 120, i.e., case 100.

Positive electrode terminal 302 is electrically connected to a positive electrode of electrode assembly 200. Positive electrode terminal 302 is attached to sealing plate 130, i.e., case 100.

Negative electrode terminal 301 (first electrode terminal) is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 134 is sealed by a sealing member (not shown). As the sealing member, for example, a blind rivet or another metal member can be used.

Electrode assembly 200 is an electrode assembly having a flat shape and having a below-described positive electrode plate and a below-described negative electrode plate. Specifically, electrode assembly 200 is a wound type electrode assembly in which a strip-shaped positive electrode plate and a strip-shaped negative electrode plate are both wound with a strip-shaped separator (not shown) being interposed therebetween. It should be noted that in the present specification, the "electrode assembly" is not limited to the wound type electrode assembly, and may be a stacked type electrode assembly in which a plurality of positive electrode plates and a plurality of negative electrode plates are alternately stacked. The strip-shaped separator can be constituted of, for example, a microporous membrane composed of polyolefin. The electrode assembly may include a plurality of positive electrode plates and a plurality of negative electrode plates, respective positive electrode tabs provided in the positive electrode plates may be stacked to form a positive electrode tab group, and respective negative electrode tabs provided in the negative electrode plates may be stacked to form a negative electrode tab group. It should be noted that electrode assembly 200 may include a plurality of wound type electrode assemblies or may include a plurality of stacked type electrode assemblies.

As shown in Fig. 6, case 100 accommodates electrode assembly 200. Fig. 6 illustrates a first electrode assembly 201 described below. First electrode assembly 201 is accommodated in case 100 such that the winding axis thereof is parallel to the X direction.

Specifically, one or a plurality of the wound type electrode assemblies and an electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and diethyl carbonate (DEC) at a volume ratio (25°C) of 30:30:40. It should be noted that instead of the electrolyte solution, a solid electrolyte may be used.

First electrode assembly 201 includes: a main body portion (portion in which a positive electrode plate and a negative electrode plate are stacked with a separator being interposed therebetween); a negative electrode tab group 220 (second electrode tab group); and a positive electrode tab group 250 (first electrode tab group).

The main body portion is constituted of a below-described negative electrode plate 210 and a below-described positive electrode plate 240. Negative electrode tab group 220 is located at an end portion of first electrode assembly 201 on the first side with respect to the main body portion thereof in the first direction (X direction). The first side in the present embodiment is the sealing plate 120 side. Positive electrode tab group 250 is located at an end portion of first electrode assembly 201 on the second side with respect to the main body portion thereof in the first direction (X direction). The second side in the present embodiment is the sealing plate 130 side.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 301 and positive electrode terminal 302 through current collectors 400.

Negative electrode current collector 400A is disposed on sealing plate 120 with an insulating member composed of a resin being interposed therebetween. Negative electrode current collector 400A is electrically connected to negative electrode tab group 220 and negative electrode terminal 301. Negative electrode current collector 400A is composed of a conductive material (more specifically, a metal), and can be composed of copper, a copper alloy, or the like, for example. It should be noted that details of negative electrode current collector 400A will be described later.

Positive electrode current collector 400B is disposed on sealing plate 130 with an insulating member composed of a resin being interposed therebetween. Positive electrode current collector 400B is electrically connected to positive electrode tab group 250 and positive electrode terminal 302. Positive electrode current collector 400B is composed of a conductive material (more specifically, a metal), and can be composed of aluminum, an aluminum alloy, or the like, for example. It should be noted that positive electrode tab group 250 may be electrically connected to sealing plate 130 directly or via positive electrode current collector 400B. In this case, sealing plate 130 may serve as positive electrode terminal 302. Moreover, details of positive electrode current collector 400B will be described later.

### (Configuration of Electrode Assembly 200)

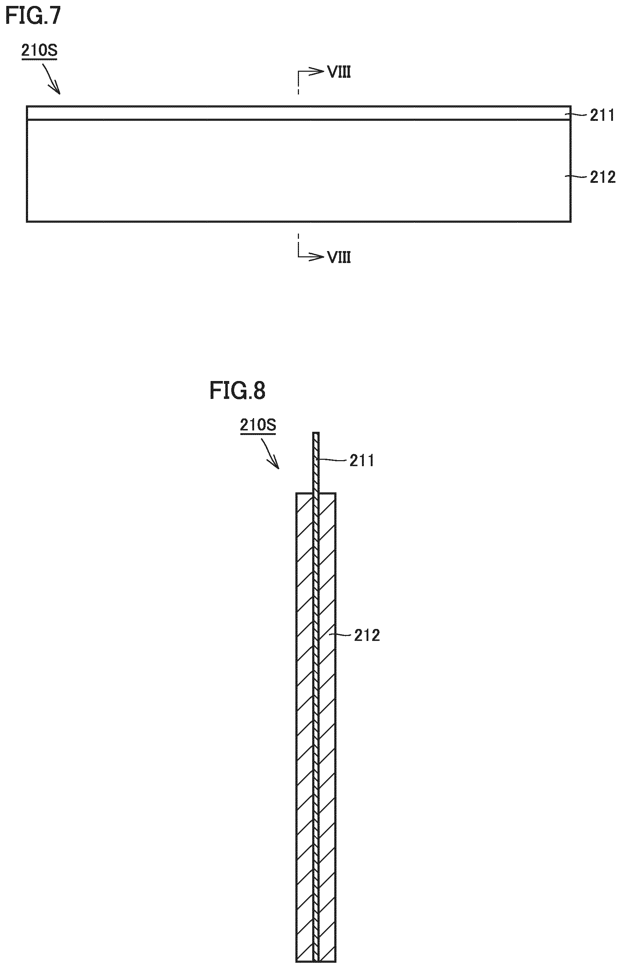

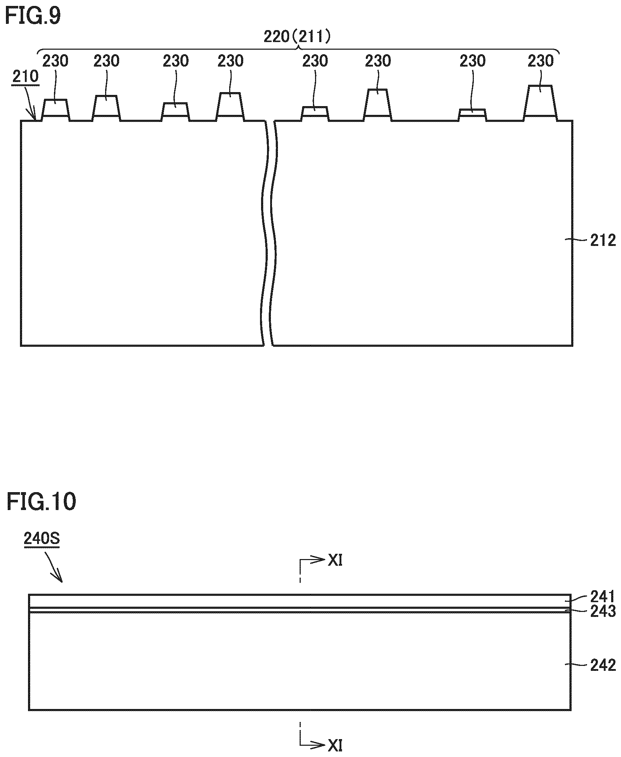

Fig. 7 is a front view showing a negative electrode raw plate 210S before negative electrode plate 210 is formed, Fig. 8 is a cross sectional view of negative electrode raw plate 210S shown in Fig. 7 along VIII-VIII, and Fig. 9 is a front view showing negative electrode plate 210 formed from negative electrode raw plate 210S.

Negative electrode plate 210 is manufactured by processing negative electrode raw plate 210S. As shown in Figs. 7 and 8, negative electrode raw plate 210S includes a negative electrode core body 211 (second electrode core body) and a negative electrode active material layer 212. Negative electrode core body 211 is a copper foil or a copper alloy foil.

Negative electrode active material layer 212 is formed on negative electrode core body 211 except for each of end portions of both surfaces of negative electrode core body 211 on one side. Negative electrode active material layer 212 is formed by applying a negative electrode active material layer slurry using a die coater.

The negative electrode active material layer slurry is produced by kneading graphite serving as a negative electrode active material, styrene-butadiene rubber (SBR) and carboxymethyl cellulose (CMC) each serving as a binder, and water serving as a dispersion medium such that the mass ratio of the graphite, the SBR, and the CMC is about 98:1:1.

Negative electrode core body 211 having the negative electrode active material layer slurry applied thereon is dried to remove the water included in the negative electrode active material layer slurry, thereby forming negative electrode active material layer 212. Further, by compressing negative electrode active material layer 212, negative electrode raw plate 210S including negative electrode core body 211 and negative electrode active material layer 212 is formed. Negative electrode raw plate 210S is cut into a predetermined shape, thereby forming negative electrode plate 210. Negative electrode raw plate 210S can be cut by laser processing with application of an energy ray, die processing, cutter processing, or the like.

As shown in Fig. 9, a plurality of negative electrode tabs 230 (second electrode tab) each constituted of negative electrode core body 211 are provided at one end portion, in the width direction, of negative electrode plate 210 formed from negative electrode raw plate 210S. When negative electrode plate 210 is wound, the plurality of negative electrode tabs 230 are stacked to form negative electrode tab group 220. Thus, negative electrode tab group 220 is connected to negative electrode plate 210. The position of each of the plurality of negative electrode tabs 230 and the length thereof in the protruding direction are appropriately adjusted in consideration of the state in which negative electrode tab group 220 is connected to negative electrode current collector 400A. It should be noted that the shape of negative electrode tab 230 is not limited to the one illustrated in Fig. 8.

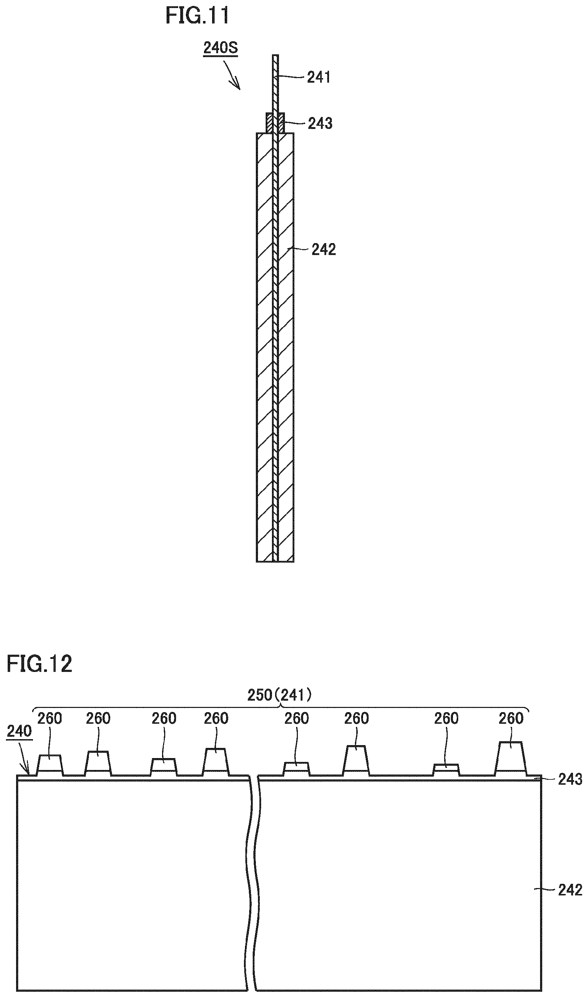

Fig. 10 is a front view showing a positive electrode raw plate 240S before positive electrode plate 240 is formed, Fig. 11 is a cross sectional view of positive electrode raw plate 240S shown in Fig. 10 along XI-XI, and Fig. 12 is a front view showing positive electrode plate 240 formed from positive electrode raw plate 240S.

Positive electrode plate 240 serving as the second electrode has a polarity different from a polarity of negative electrode plate 210 serving as the first electrode. Positive electrode plate 240 is manufactured by processing positive electrode raw plate 240S. As shown in Figs. 10 and 11, positive electrode raw plate 240S includes a positive electrode core body 241 (first electrode core body), a positive electrode active material layer 242, and a positive electrode protective layer 243. Positive electrode core body 241 is an aluminum foil or an aluminum alloy foil.

Positive electrode active material layer 242 is formed on positive electrode core body 241 except for each of end portions of both surfaces of positive electrode core body 241 on one side. Positive electrode active material layer 242 is formed on positive electrode core body 241 by applying a positive electrode active material layer slurry using a die coater.

The positive electrode active material layer slurry is produced by kneading a lithium-nickel-cobalt-manganese composite oxide serving as a positive electrode active material, polyvinylidene difluoride (PVdF) serving as a binder, a carbon material serving as a conductive material, and N-methyl-2-pyrrolidone (NMP) serving as a dispersion medium such that the mass ratio of the lithium-nickel-cobalt-manganese composite oxide, the PVdF, and the carbon material is about 97.5:1:1.5.

Positive electrode protective layer 243 is formed in contact with positive electrode core body 241 at an end portion of positive electrode active material layer 242 on the one side in the width direction. Positive electrode protective layer 243 is formed on positive electrode core body 241 by applying a positive electrode protective layer slurry using a die coater. Positive electrode protective layer 243 has an electrical resistance larger than that of positive electrode active material layer 242.

The positive electrode protective layer slurry is produced by kneading alumina powder, a carbon material serving as a conductive material, PVdF serving as a binder, and NMP serving as a dispersion medium such that the mass ratio of the alumina powder, the carbon material, and the PVdF is about 83:3:14.

Positive electrode core body 241 having the positive electrode active material layer slurry and the positive electrode protective layer slurry applied thereon is dried to remove the NMP included in the positive electrode active material layer slurry and the positive electrode protective layer slurry, thereby forming positive electrode active material layer 242 and positive electrode protective layer 243. Further, by compressing positive electrode active material layer 242, positive electrode raw plate 240S including positive electrode core body 241, positive electrode active material layer 242, and positive electrode protective layer 243 is formed. Positive electrode raw plate 240S is cut into a predetermined shape, thereby forming positive electrode plate 240. Positive electrode raw plate 240S can be cut by laser processing with application of an energy ray, die processing, cutter processing, or the like.

As shown in Fig. 12, a plurality of positive electrode tabs 260 (first electrode tabs) each constituted of positive electrode core body 241 are provided at one end portion, in the width direction, of positive electrode plate 240 formed from positive electrode raw plate 240S. When positive electrode plate 240 is wound, the plurality of positive electrode tabs 260 are stacked to form positive electrode tab group 250. Thus, positive electrode tab group 250 is connected to positive electrode plate 240. The position of each of the plurality of positive electrode tabs 260 and the length thereof in the protruding direction are appropriately adjusted in consideration of the state in which positive electrode tab group 250 is connected to positive electrode current collector 400B. It should be noted that the shape of positive electrode tab 260 is not limited to the one illustrated in Fig. 12.

Positive electrode protective layer 243 is provided at the root of each of the plurality of positive electrode tabs 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

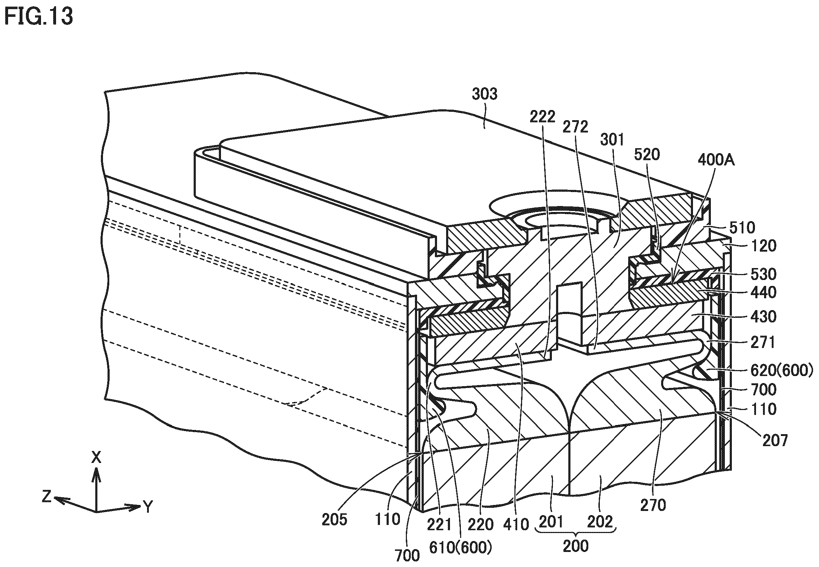

Fig. 13 is a cross sectional view of the secondary battery shown in Fig. 1 along XIII-XIII. As shown in Fig. 13, electrode assembly 200 includes first electrode assembly 201 and a second electrode assembly 202. Each of first electrode assembly 201 and second electrode assembly 202 includes a positive electrode (first electrode) and a negative electrode (second electrode). It should be noted that electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

First electrode assembly 201 includes negative electrode tab group 220. Negative electrode tab group 220 is electrically connected to a current collector 410 (negative electrode current collector) at its first end portion 205 in the X direction. Second electrode assembly 202 includes a negative electrode tab group 270. Negative electrode tab group 270 is electrically connected to a current collector 430 (negative electrode current collector) at its third end portion 207 in the X direction.

Negative electrode tab group 220 has a curved portion 221 and a tip portion 222. Curved portion 221 is a portion at which negative electrode tab group 220 is curved on the side, on which the first electrode is connected, with respect to tip portion 222. Tip portion 222 is a portion located at an end portion of negative electrode tab group 220 on the side opposite to the side on which the first electrode is connected.

Negative electrode tab group 270 has a curved portion 271 and a tip portion 272. Curved portion 271 is a portion at which negative electrode tab group 270 is curved on the side, on which the first electrode is connected, with respect to tip portion 272. Tip portion 272 is a portion located at an end portion of negative electrode tab group 270 on the side opposite to the side on which the first electrode is connected.

Negative electrode tab group 220 and negative electrode tab group 270 are curved in opposite directions such that tip portions 222, 272 are close to each other. It should be noted that tip portions 222, 272 are separated from each other in the present embodiment; however, it is not limited to this configuration, and tip portions 222, 272 may be in contact with each other.

Negative electrode current collector 400A electrically connects negative electrode terminal 301 to negative electrode tab group 220 and negative electrode tab group 270. Negative electrode current collector 400A in the present embodiment is connected to negative electrode terminal 301 between electrode assembly 200 and sealing plate 120.

Negative electrode current collector 400A includes current collector 410 and current collector 430 (first member), as well as a current collector 440 (second member).

Each of current collectors 410 is a plate-shaped member. Current collector 410 has a long-side direction in the Z direction and a short-side direction in the Y direction. Current collector 430 is a plate-shaped member. Current collector 430 has a long-side direction in the Z direction and a short-side direction in the Y direction. Current collector 410 and current collector 430 are arranged side by side in parallel in the X direction. In this way, current collector 410 and current collector 430 are constituted of separate components.

Negative electrode tab group 220 is joined to current collector 410 at a joining location 411 described later. Negative electrode tab group 270 is joined to current collector 430 at a joining location 431 described later. Joining locations 411, 431 can be formed by, for example, ultrasonic welding, resistance welding, laser welding, swaging, or the like. In the present embodiment, negative electrode tab group 220 and current collector 410 are joined by ultrasonic joining, and negative electrode tab group 270 and current collector 430 are joined by ultrasonic joining, for example.

Current collector 440 is electrically connected to current collectors 410, 430. Current collector 440 is connected to negative electrode terminal 301. The connection between current collector 440 and negative electrode terminal 301 can be formed by swaging and/or welding, for example.

Negative electrode terminal 301 is provided to be exposed to the outside of sealing plate 120 and reach current collector 440 of negative electrode current collector 400A provided on the inner surface side of sealing plate 120. Negative electrode terminal 301 is connected to a plate-shaped member 303.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

An insulating member 510 is disposed between plate-shaped member 303 and sealing plate 120. An insulating member 520 is disposed between negative electrode terminal 301 and sealing plate 120. An insulating member 530 is disposed between current collector 440 and sealing plate 120.

It should be noted that negative electrode terminal 301 may be electrically connected to sealing plate 120. Further, sealing plate 120 may function as negative electrode terminal 301.

A spacer 600 is disposed between sealing plate 120 and the main body portion (negative electrode tab group 220 is not included) of electrode assembly 200. Spacer 600 is composed of a resin member having an insulating property. Spacer 600 includes a first component 610 and a second component 620. First component 610 and second component 620 are engaged with each other at engagement portions (not shown) at both ends in the Z direction.

Each of first component 610 and second component 620 protrudes in the Y direction at its end portion side on the electrode assembly 200 side in the X direction. Thus, spacer 600 functions as a guide to facilitate curving of curved portions 221, 271 when forming curved portions 221, 271.

Insulating sheet 700 (electrode assembly holder) composed of a resin is disposed between electrode assembly 200 and case main body 110. Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

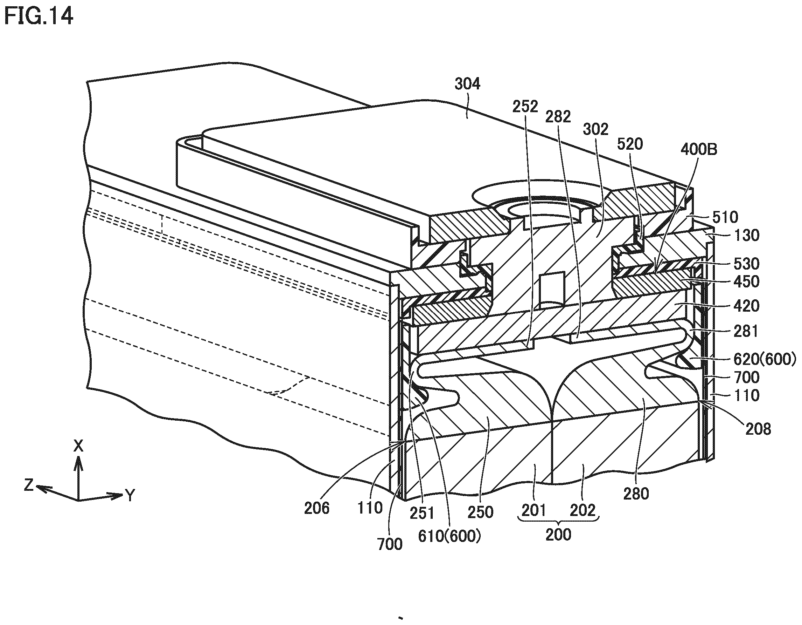

Fig. 14 is a cross sectional view of the secondary battery shown in Fig. 1 along XIV-XIV. The connection structure between electrode assembly 200 and current collector 400 on the positive electrode side of secondary battery 1 according to the present embodiment is different from that of the configuration on the negative electrode side in the following point: a portion corresponding to current collector 410 and current collector 430 on the negative electrode side is constituted of a single component.

First electrode assembly 201 includes positive electrode tab group 250. Positive electrode tab group 250 is electrically connected to current collector 420 (positive electrode current collector) at its second end portion 206 in the X direction. Second electrode assembly 202 includes a positive electrode tab group 280. Positive electrode tab group 280 is electrically connected to current collector 420 (positive electrode current collector) at its fourth end portion 208 in the X direction.

Positive electrode tab group 250 has a curved portion 251 and a tip portion 252. Curved portion 251 is a portion at which positive electrode tab group 250 is curved on the side, on which the second electrode is connected, with respect to tip portion 252. Tip portion 252 is a portion located at an end portion of positive electrode tab group 250 on the side opposite to the side on which the second electrode is connected.

Positive electrode tab group 280 has a curved portion 281 and a tip portion 282. Curved portion 281 is a portion at which positive electrode tab group 280 is curved on the side, on which the second electrode is connected, with respect to tip portion 282. Tip portion 282 is a portion located at an end portion of positive electrode tab group 280 on the side opposite to the side on which the second electrode is connected.

Positive electrode tab group 250 and positive electrode tab group 280 are curved in opposite directions such that tip portions 252, 282 are close to each other. It should be noted that tip portions 252, 282 are separated from each other in the present embodiment; however, it is not limited to this configuration, and tip portions 252, 282 may be in contact with each other.

Positive electrode current collector 400B electrically connects positive electrode terminal 302 to positive electrode tab group 250 and positive electrode tab group 280. Positive electrode current collector 400B in the present embodiment is connected to positive electrode terminal 302 between electrode assembly 200 and sealing plate 130.

Positive electrode current collector 400B includes current collector 420 (first member) and a current collector 450 (second member).

Current collector 420 is a plate-shaped member. Current collector 420 has a long-side direction in the Z direction and a short-side direction in the Y direction. Current collector 420 is constituted of a single component in one piece.

Positive electrode tab group 250 and positive electrode tab group 280 are joined, at below-described joining locations 421, to current collector 420 constituted of the single component. Each of joining locations 421 may be formed by ultrasonic welding, resistance welding, laser welding, swaging, or the like, for example. In the present embodiment, positive electrode tab group 250 and positive electrode tab group 280 are joined to current collector 420 by ultrasonic joining, for example.

Current collector 450 is electrically connected to current collector 420. Current collector 450 is connected to positive electrode terminal 302. The connection between current collector 450 and positive electrode terminal 302 may be formed by swaging and/or welding, for example.

Positive electrode terminal 302 is provided to be exposed to the outside of sealing plate 130 and reach current collector 450 of positive electrode current collector 400B provided on the inner surface side of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 may be formed by, for example, laser welding or the like.

An insulating member 510 is disposed between plate-shaped member 304 and sealing plate 130. An insulating member 520 is disposed between positive electrode terminal 302 and sealing plate 130. An insulating member 530 is disposed between current collector 450 and sealing plate 130.

It should be noted that positive electrode terminal 302 may be electrically connected to sealing plate 130. Further, sealing plate 130 may function as positive electrode terminal 302.

A spacer 600 is disposed between sealing plate 130 and the main body portion (positive electrode tab groups 250, 280 are not included) of electrode assembly 200. Spacer 600 is composed of a resin member having an insulating property. Spacer 600 includes a first component 610 and a second component 620. First component 610 and second component 620 are engaged with each other at engagement portions (not shown) at both ends in the Z direction.

Each of first component 610 and second component 620 protrudes in the Y direction at its end portion side on the electrode assembly 200 side in the X direction. Thus, spacer 600 functions as a guide to facilitate curving of curved portions 251, 281 when forming curved portions 251, 281.

Insulating sheet 700 (electrode assembly holder) composed of a resin is disposed between electrode assembly 200 and case main body 110.

### (Manufacturing Process for Secondary Battery 1)

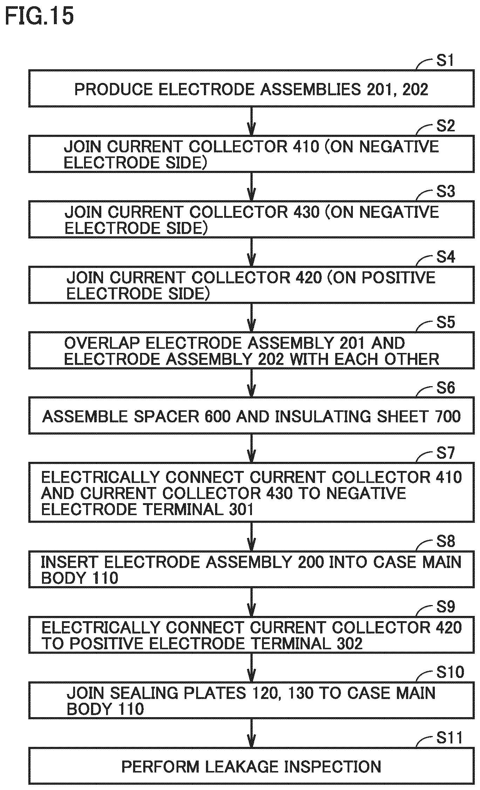

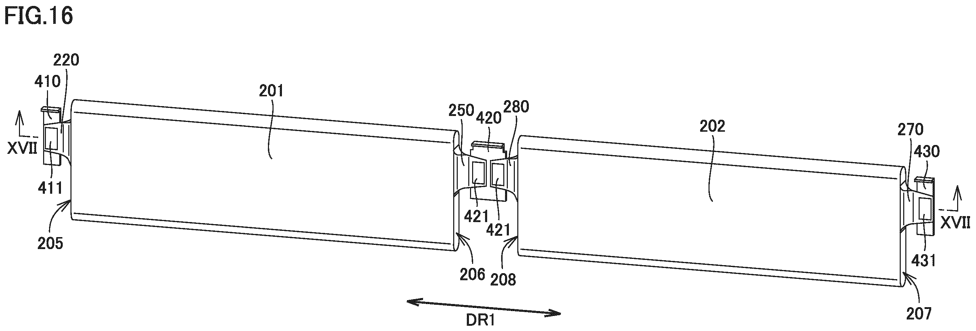

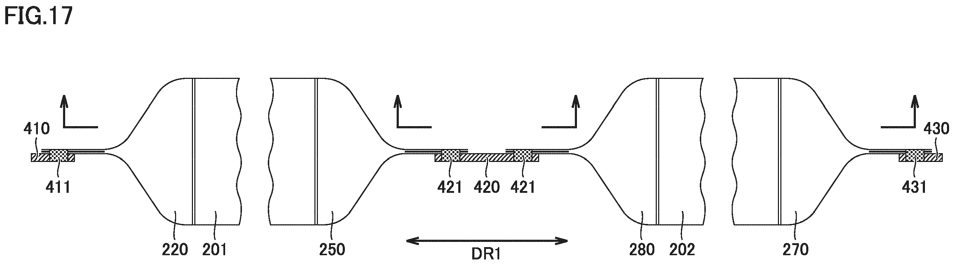

Hereinafter, a method of manufacturing the secondary battery according to the present embodiment will be described. Fig. 15 is a flowchart showing a method of manufacturing the secondary battery according to the first embodiment. Fig. 16 is a perspective view showing a state before two electrode assemblies included in the secondary battery according to the first embodiment are overlapped with each other. Fig. 17 is a cross sectional view of each of the electrode assemblies and the current collectors shown in Fig. 16 along XVII-XVII.

As shown in Fig. 15, in the method of manufacturing the secondary battery according to the present embodiment, first, first electrode assembly 201 and second electrode assembly 202 are produced (step S1). Parts of the tips of negative electrode tab group 220, positive electrode tab group 250, negative electrode tab group 270, and positive electrode tab group 280 are cut such that they have the same tip length when bundled.

As shown in Figs. 15 to 17, after producing first electrode assembly 201 and second electrode assembly 202, negative electrode tab group 220 is joined to current collector 410 (step S2). Negative electrode tab group 220 is joined to current collector 410 at joining location 411. Next, negative electrode tab group 270 is joined to current collector 430 (step S3). Negative electrode tab group 270 is joined to current collector 430 at joining location 431.

Next, first electrode assembly 201, current collector 420, and second electrode assembly 202 are disposed side by side in this order in a DR1 direction. Positive electrode tab group 250 is disposed on one side with respect to current collector 420 in the DR1 direction. Positive electrode tab group 250 and positive electrode tab group 280 are joined to current collector 420 with positive electrode tab group 280 being disposed on the other side with respect to current collector 420 in the DR1 direction (step S4). Positive electrode tab group 250 and positive electrode tab group 280 are joined to current collector 420 at joining locations 421.

In the height direction of each of first electrode assembly 201 and second electrode assembly 202, each of current collector 410, current collector 420 and current collector 430 is disposed on one side with respect to the center of each of first electrode assembly 201 and second electrode assembly 202. Thus, each of the current collectors can be formed to be short, thereby reducing the size of the current collector.

It should be noted that each of current collector 410, current collector 420, and current collector 430 is not limited to this configuration. In the height direction of each of first electrode assembly 201 and second electrode assembly 202, each of current collector 410, current collector 420, and current collector 430 may be disposed at the center of a corresponding one of first electrode assembly 201 and second electrode assembly 202. In this case, in the height direction of each of first electrode assembly 201 and second electrode assembly 202, each of negative electrode tab group 220, positive electrode tab group 250, negative electrode tab group 270, and positive electrode tab group 280 is disposed at the center of a corresponding one of first electrode assembly 201 and second electrode assembly 202 so as to correspond to a corresponding one of current collector 410, current collector 420, and current collector 430.

Further, the order of the steps of joining current collector 410, current collector 420 and current collector 430 to first electrode assembly 201 and second electrode assembly 202 is not limited to the one described above, and the order may be changed. Each of the respective steps of joining current collector 410 and current collector 430 to first electrode assembly 201 and second electrode assembly 202 is preferably performed before the below-described step of overlapping first electrode assembly 201 and second electrode assembly 202 with each other, and is preferably performed before the step of joining current collector 420 to first electrode assembly 201 and second electrode assembly 202.

Next, after joining positive electrode tab group 250 and positive electrode tab group 280 to current collector 420, positive electrode tab group 250 and positive electrode tab group 280 are bent in the thickness direction (direction orthogonal to the DR1 direction in Figs. 16 and 17) of each of first electrode assembly 201 and second electrode assembly 202, thereby overlapping first electrode assembly 201 and second electrode assembly 202 with each other (step S5). That is, first electrode assembly 201 and second electrode assembly 202 are collected together.

Regarding the expression "overlapping the first electrode assembly and the second electrode assembly with each other", the first electrode assembly and the second electrode assembly may be overlapped with each other directly, or another member may be disposed between the first electrode assembly and the second electrode assembly. Further, the first electrode assembly and the second electrode assembly may or may not be fixed by a tape or the like. Further, the first electrode assembly, the current collector, and the second electrode assembly may not be disposed on a straight line in the DR1 direction, and the first electrode assembly or the second electrode assembly may be inclined with respect to the current collector in the DR1 direction.

Positive electrode tab group 250 and positive electrode tab group 280 are folded such that tip portions thereof face each other. Similarly, negative electrode tab group 220 and negative electrode tab group 270 are also folded such that tip portions thereof face each other.

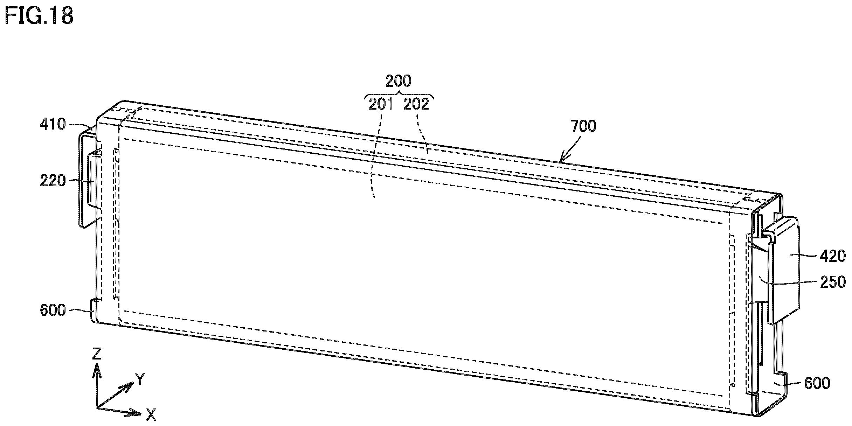

Fig. 18 is a perspective view showing a state of attaching a holder and a spacer to the electrode assembly. As shown in Fig. 18, next, spacer 600 and insulating sheet 700 are assembled to electrode assembly 200 (step S6).

It should be noted that insulating sheet 700 does not necessarily need to cover a whole of the surfaces of electrode assembly 200. Insulating sheet 700 preferably covers an area of about 50% or more, more preferably about 70% or more, of the outer surfaces of the electrode assembly. Insulating sheet 700 preferably covers a whole of at least four surfaces of the six surfaces of electrode assembly 200 having a substantially rectangular parallelepiped shape (flat shape) other than the two surfaces thereof on which negative electrode tab group 220 and positive electrode tab group 250 are formed respectively.

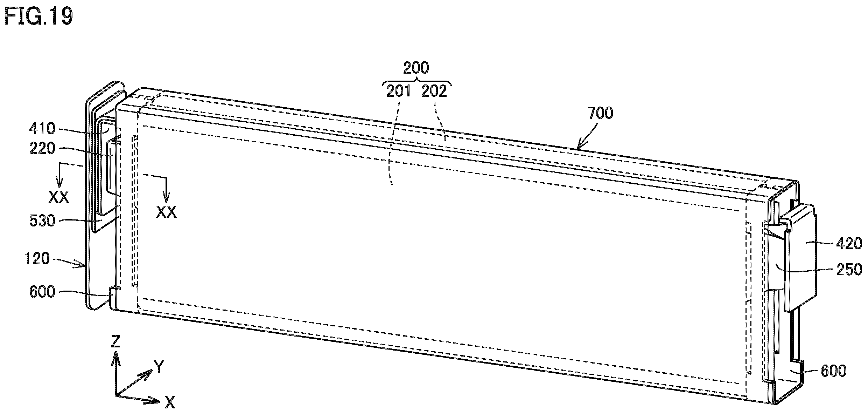

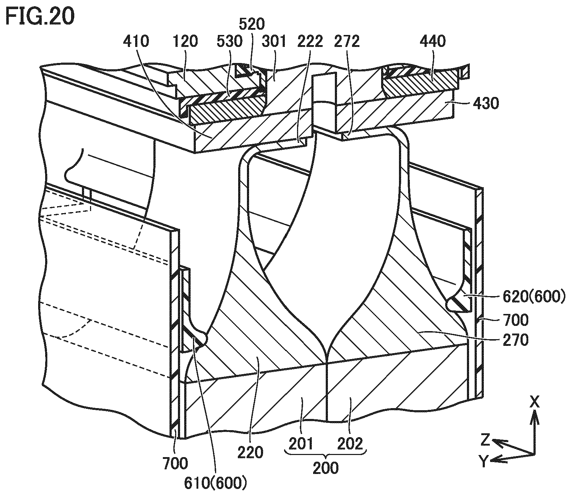

Fig. 19 is a perspective view showing a state of attaching sealing plate 120 to the current collectors on the negative electrode side. Fig. 20 is a cross sectional view of each of the electrode assemblies and the current collectors shown in Fig. 19 along XX-XX.

As shown in Figs. 15, 19, and 20, current collector 410 and current collector 430 are electrically connected to negative electrode terminal 301 via current collector 440 after joining negative electrode tab group 220 to current collector 410, joining negative electrode tab group 270 to current collector 430, and overlapping first electrode assembly 201 and second electrode assembly 202 with each other (step S7). It should be noted that step S7 can be performed before step S6.

Specifically, negative electrode tab group 220 and negative electrode tab group 270 are folded such that tip portions 222, 272 face each other.

Each of negative electrode terminal 301 and current collector 440 is attached to sealing plate 120 with an insulating member being interposed therebetween. Current collector 440 is brought into abutment with current collector 410 and current collector 430 in the X direction. Moreover, current collector 440 and each of current collector 410 and current collector 430 are electrically connected. It should be noted that the connecting of plate-shaped member 303 to negative electrode terminal 301 may be performed at any timing.

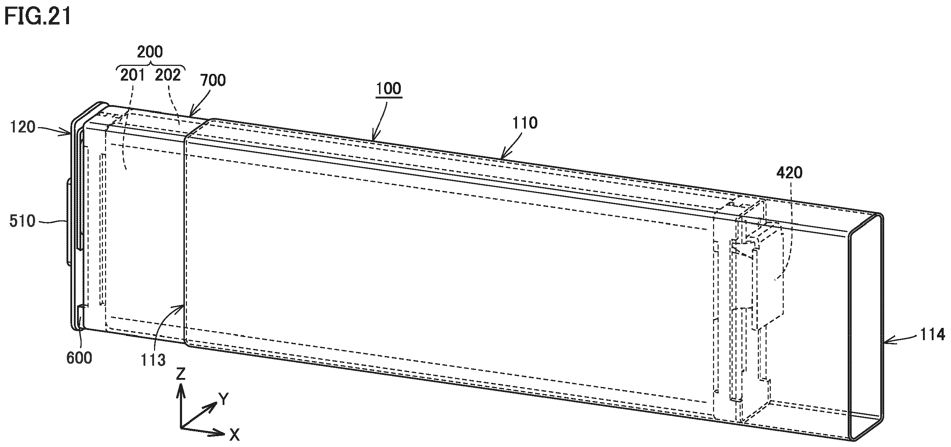

Fig. 21 is a perspective view showing a state of inserting the electrode assemblies into the case main body. As shown in Figs. 15 and 21, next, after overlapping first electrode assembly 201 and second electrode assembly 202 with each other, first electrode assembly 201 and second electrode assembly 202 are inserted into case main body 110 via opening 113 with the current collector 420 side being inserted first (step S8).

Negative electrode tab group 220 and negative electrode tab group 270 are curved by bringing sealing plate 120 close to the main body portion of electrode assembly 200 (first electrode assembly 201 and second electrode assembly 202). It should be noted that sealing plate 120 and case main body 110 are preferably brought close to each other by bringing sealing plate 120 close to the main body portion of electrode assembly 200 disposed in case main body 110. As shown in Fig. 13, negative electrode tab group 220 and negative electrode tab group 270 are curved along the shape of spacer 600 such that the folded portions of curved portions 221, 271 are close to case main body 110 in the Y direction.

After bringing sealing plate 120 into abutment with case main body 110, sealing plate 120 is temporarily joined to case main body 110. By the temporary joining, sealing plate 120 is partially joined to opening 113 of case main body 110. Thus, sealing plate 120 is positioned with respect to case main body 110.

When inserting electrode assembly 200 into case main body 110, electrode assembly 200 may be pulled from the current collector 420 side, or may be pushed from each of the current collector 410 side and the current collector 430 side. When electrode assembly 200 is pushed from each of the current collector 410 side and the current collector 430 side, negative electrode tab group 220 and negative electrode tab group 270 can be curved at the same time.

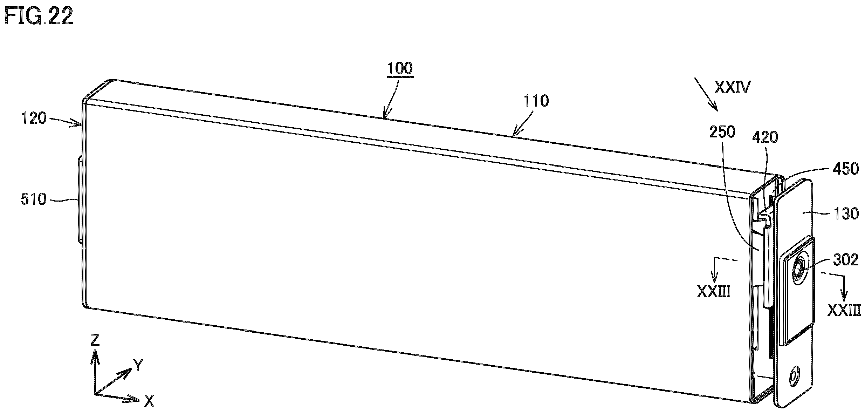

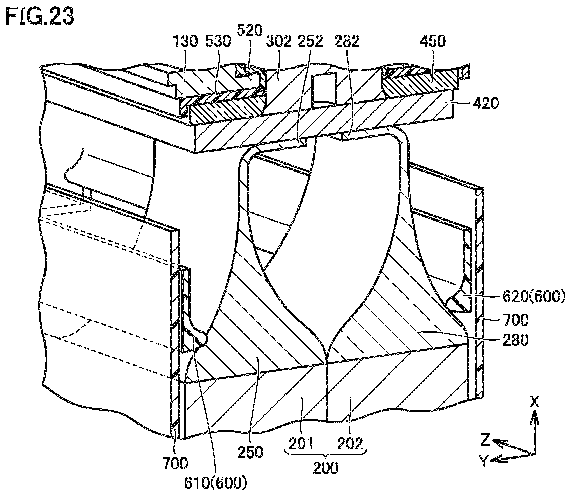

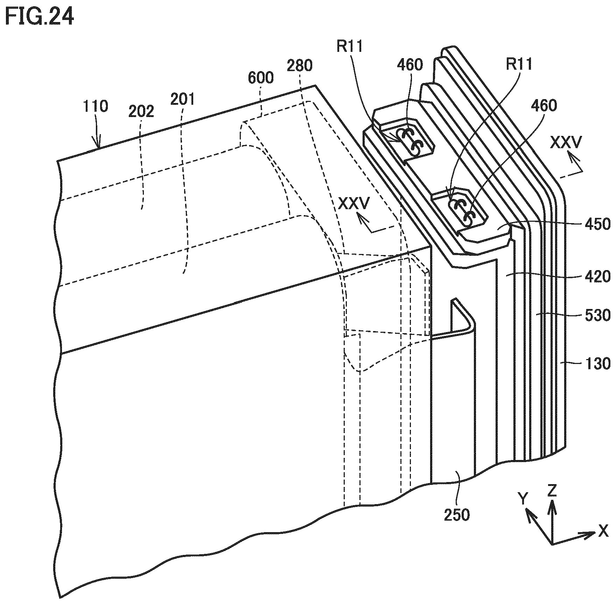

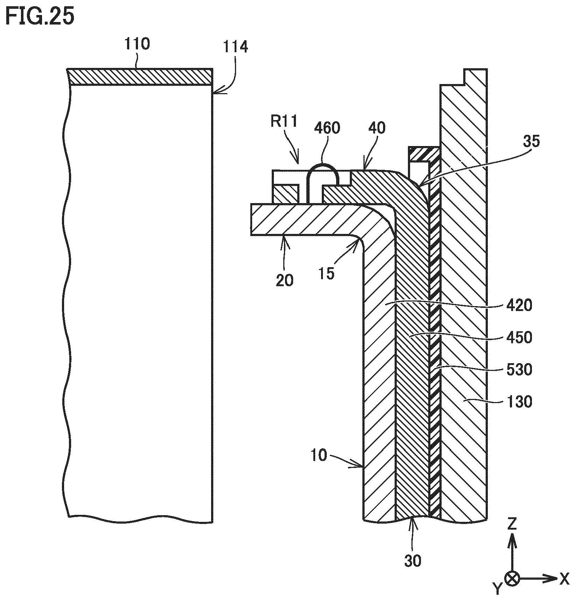

Fig. 22 is a perspective view showing a state of attaching sealing plate 130 to the current collectors on the positive electrode side. Fig. 23 is a cross sectional view of each of the electrode assemblies and the current collectors shown in Fig. 22 along XXIII-XXIII. Fig. 24 is a diagram showing a state in which the current collectors shown in Fig. 22 are viewed in a direction of arrow XXIV. Fig. 25 is a cross sectional view of the current collectors shown in Fig. 24 along XXV-XXV. It should be noted that in Fig. 23, case main body 110 is not shown.

As shown in Figs. 15 and 22 to 25, current collector 420 is electrically connected to positive electrode terminal 302 after inserting first electrode assembly 201 and second electrode assembly 202 into case main body 110 (step S9).

Specifically, each of positive electrode terminal 302 and current collector 450 is attached to sealing plate 130 with an insulating member being interposed therebetween. After inserting first electrode assembly 201 and second electrode assembly 202 into case main body 110, current collector 450 is brought into abutment, in the X direction, with current collector 420 protruding from opening 114. It should be noted that the connecting of plate-shaped portion 304 to positive electrode terminal 302 may be performed at any timing.

As shown in Fig. 25, current collector 420 (first member) has a first region 10 extending along sealing plate 130, a second region 20 extending in a direction orthogonal to sealing plate 130, and an intermediate portion 15 (first folded portion) located between first region 10 and second region 20. Current collector 450 (second member) has a third region 30 extending along sealing plate 130, a fourth region 40 extending in the direction orthogonal to sealing plate 130, and an intermediate portion 35 (second folded portion) located between third region 30 and fourth region 40. Second region 20 and fourth region 40 extend from the end portions of first region 10 and third region 30 toward electrode assembly 200.

In the example of Fig. 25, each of current collectors 420, 450 is folded at substantially a right angle at a corresponding one of intermediate portions 15, 35. However, the folding angle of each of current collectors 420, 450 is not limited to 90°. Preferably, a folding angle of about 45° or more and 135° or less may be employed. It should be noted that both end portions of the folded portions of current collectors 420, 450 in the width direction (Y direction) may be provided with notches in order to facilitate the folding. Each of the folded portions can include a portion processed to have a curvature.

First region 10 of current collector 420 and third region 30 of current collector 450 are disposed to overlap with each other. First region 10 is located on the electrode assembly 200 side with respect to third region 30. Positive electrode tab groups 250, 280 are connected to first region 10 of current collector 420.

First region 10 and third region 30 do not necessarily need to be in abutment with each other as long as first region 10 and third region 30 overlap with each other when viewed in the X direction. However, first region 10 and third region 30 are preferably disposed close to each other to some extent, and a clearance therebetween is preferably about 5.0 mm or less, is more preferably about 3.0 mm or less, and is further preferably about 1.0 mm or less, for example.

When viewed in the X direction orthogonal to sealing plate 130, the area of the overlapping portion between first region 10 and third region 30 is preferably about 100 mm² or more. When viewed in the X direction, the area of third region 30 may be larger than the area of first region 10. Here, the area of the overlapping portion between first region 10 and third region 30 is preferably about 50% or more, and more preferably about 70% or more of the area of third region 30. Further, an insulating member may be provided between first region 10 and third region 30. The insulating member provided between first region 10 and third region 30 may be constituted of, for example, an insulating tape, a resin plate, or the like.

A fuse portion constituted of a through hole, a thin portion (groove portion), a notch, or the like can be formed in current collector 420 or current collector 450. Thus, when an external short circuit or the like occurs, the fuse portion is melted and disconnected to shut off the current. It should be noted that the fuse portion may be provided in any of first region 10, second region 20, third region 30, and fourth region 40.

Second region 20 of current collector 420 and fourth region 40 of current collector 450 are disposed to overlap with each other. Thus, an abutment region R11 in which current collector 420 and current collector 450 overlap with each other is formed.

Current collector 420 and current collector 450 are electrically connected to each other via a connection member 460 (third member). Connection member 460 is constituted of, for example, a conductive wire, a conductive ribbon, or the like. That is, current collector 420 and current collector 450 can be electrically connected to each other by wire bonding or ribbon bonding. Each of current collectors 420, 450 can be connected to connection member 460 by ultrasonic joining, for example,

In each of Fig. 24, Fig. 25, and figures described below, the number of connection members 460 that connect current collector 420 and current collector 450, the shape of connection member 460, and the connection position of connection member 460 can be appropriately changed.

When joining current collector 420 and current collector 450 to each other by laser welding, laser light serving as high-energy ray is applied to at least one of current collector 420 and current collector 450 located in abutment region R11 from between sealing plate 130 and the end portion of case main body 110 on the opening 114 side, with the result that current collector 420 and current collector 450 are welded and connected at a welding position P1 of abutment region R11.

In this case, it is necessary to perform the laser welding in a narrow area, and it may be difficult to provide a dust collection mechanism. Moreover, since it is difficult to manage a direction of flying of sputter due to the laser welding, the foreign matter may enter case main body 110. Further, reflected light of the laser light may affect insulating member 530. From another viewpoint, a required value of precision of positioning between current collector 420 and current collector 450 becomes high.

On the other hand, in secondary battery 1 according to the present embodiment, since the application (laser welding) of the high-energy ray for directly connecting the base members (current collector 420 and current collector 450) is not required, the electric connection between the current collecting portions can be stably attained while suppressing generation of dust. Moreover, the reflected light of the laser light can be suppressed from affecting insulating member 530, and the required value of precision of positioning between current collector 420 and current collector 450 can be suppressed from becoming too high.

Thus, according to the present embodiment, it is possible to obtain secondary battery 1 having high reliability while suppressing decreased manufacturing efficiency.

It should be noted that the connection between the current collectors on the sealing plate 120 side (negative electrode side) can also be configured in the same manner as the connection between the current collectors on the sealing plate 130 side (positive electrode side). Further, current collector 420 on the sealing plate 130 side (positive electrode side) may be constituted of a plurality of (two) separate members in the same manner as current collectors 410, 430 on the sealing plate 120 side (negative electrode side).

As shown in Fig. 23, positive electrode tab group 250 and positive electrode tab group 280 connected to current collector 420 are folded such that tip portions 252, 282 face each other. From the state shown in Figs. 23 to 25, sealing plate 130 is brought into abutment with case main body 110. On this occasion, positive electrode tab group 250 and positive electrode tab group 280 are curved by bringing sealing plate 130 and the main body portion of electrode assembly 200 close to each other. As shown in Fig. 14, positive electrode tab group 250 and positive electrode tab group 280 are curved along the shape of spacer 600 such that the folded portions of curved portions 251, 281 are close to case main body 110 in the Y direction.

After sealing plate 130 is brought into abutment with case main body 110, sealing plate 130 is temporarily welded to case main body 110. By the temporary joining, sealing plate 130 is partially joined to opening 114 of case main body 110. Thus, sealing plate 130 is positioned with respect to case main body 110.

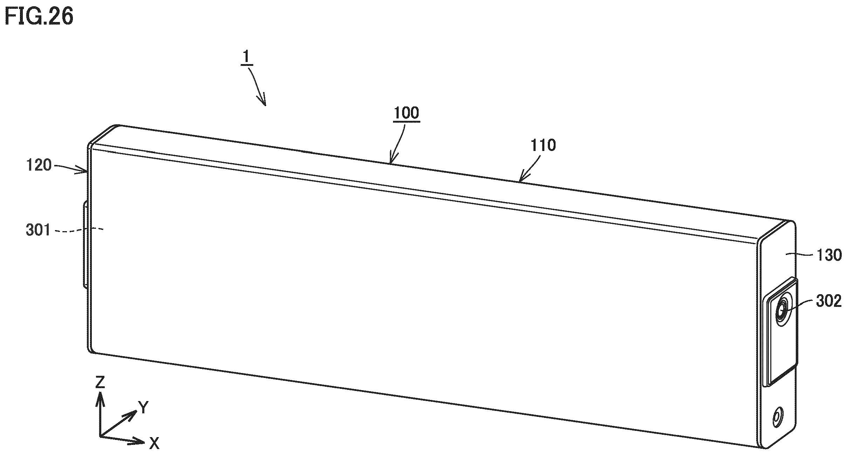

Fig. 26 is a perspective view showing a configuration of the secondary battery according to the first embodiment. As shown in Figs. 15 and 26, next, sealing plate 120 and sealing plate 130 are joined to case main body 110 (step S10). Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S11). After the leakage inspection, secondary battery 1 is dried to remove moisture in case 100. Then, the electrolyte solution is injected into case 100 through injection hole 134. When injecting the electrolyte solution, case 100 is inclined with sealing plate 130 facing upward and sealing plate 120 facing downward, thereby injecting the electrolyte solution into case 100 via injection hole 134 of sealing plate 130. Thereafter, charging is performed to result in release of gas. For performing the charging to result in release of gas, injection hole 134 may be temporarily sealed. Thereafter, injection hole 134 is sealed, thereby completing secondary battery 1.

It should be noted that the order of the step of inserting electrode assembly 200 and the step of connecting the current collectors is not limited to the above-described example. For example, after only a portion of electrode assembly 200 is inserted into case main body 110 with the end portion of negative electrode active material layer 212 (second electrode active material layer) on the opening 113 side being disposed outside case main body 110 (first step), negative electrode terminal 301 (second electrode terminal) provided on sealing plate 120 (second sealing plate) and negative electrode tab groups 220, 270 (second electrode tab) may be electrically connected to each other, and then electrode assembly 200 may be inserted into case main body 110 until the end portion of negative electrode active material layer 212 on the opening 113 side is disposed inside case main body 110 (second step). That is, negative electrode terminal 301 and electrode assembly 200 can be electrically connected to each other during the step of inserting electrode assembly 200 into case main body 110.

In the present embodiment, since first electrode assembly 201 is provided with negative electrode tab group 220 and positive electrode tab group 250 and second electrode assembly 202 is provided with negative electrode tab group 270 and positive electrode tab group 280, first electrode assembly 201 and second electrode assembly 202 can be configured to have separate electrode tabs. With this configuration, the electrode tabs can be shortened as compared with a case where one collective electrode tab is formed by first electrode assembly 201 and second electrode assembly 202 and the electrode tab is bent. As a result, the occupied volume of the electrode tabs can be reduced, thereby improving the energy density of secondary battery 1. Further, in the configuration in which the separate electrode tabs are respectively provided for first electrode assembly 201 and second electrode assembly 202, the electrode tabs are readily bent and the electrode tabs and the current collectors can be therefore readily joined as compared with the case where one collective electrode tab is formed by first electrode assembly 201 and second electrode assembly 202, with the result that the secondary battery can be stably manufactured. In particular, since secondary battery 1 can be stably manufactured, reliability of the connection portion between each of the electrode tabs and each of the current collectors can be increased.

Hereinafter, secondary batteries according to second to seventh embodiments will be described. Regarding each of the secondary batteries according to the second to seventh embodiments, the same configuration as that of secondary battery 1 according to the first embodiment will not be described repeatedly and the same configuration among the second to seventh embodiments will not be described repeatedly.

In each of the second to seventh embodiments, connection between current collectors on the sealing plate 130 side will be described; however, connection between current collectors on the sealing plate 120 side can be configured in the same manner as the connection between the current collectors on the sealing plate 130 side.

### (Second Embodiment)

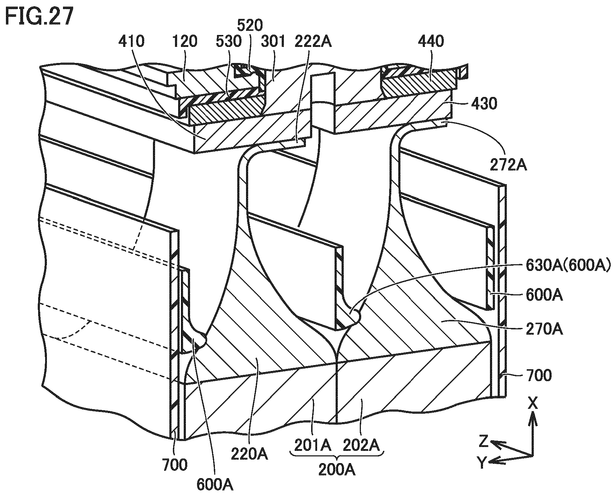

Fig. 27 is a cross sectional view showing a configuration of the secondary battery according to the second embodiment. As shown in Fig. 27, in the secondary battery according to the second embodiment, tip portions 222A, 272A of a negative electrode tab group 220A and a negative electrode tab group 270A are bent in the same direction in the Y direction.

Thereafter, a first electrode assembly 201A and a second electrode assembly 202A are inserted into the case main body, and sealing plate 120 is brought into abutment with the case main body. Thus, negative electrode tab group 220A and negative electrode tab group 270A are curved in the same direction such that tip portions 222A, 272A are oriented in the same direction. In order to facilitate curving of tip portions 222A, 272A in the same direction, a third component 630A of a spacer 600A is provided between negative electrode tab group 220A and negative electrode tab group 270A.

Since tip portions 222A, 272A of negative electrode tab group 220A and negative electrode tab group 270A are curved in the same direction in the Y direction, first electrode assembly 201 to which current collector 410 is attached and second electrode assembly 202 to which current collector 430 is attached can be prepared to have the same configuration. Thus, first electrode assembly 201 to which current collector 410 is attached and second electrode assembly 202 to which current collector 430 is attached can be configured as one type of electrode assembly, thus resulting in a simplified manufacturing process.

### (Third Embodiment)

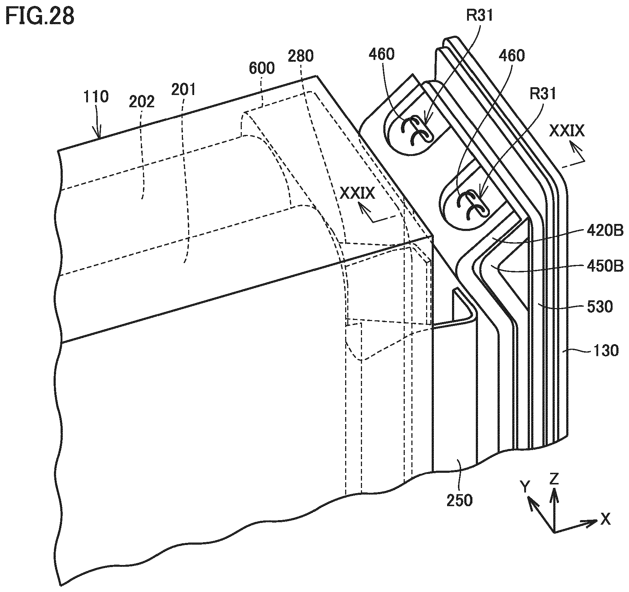

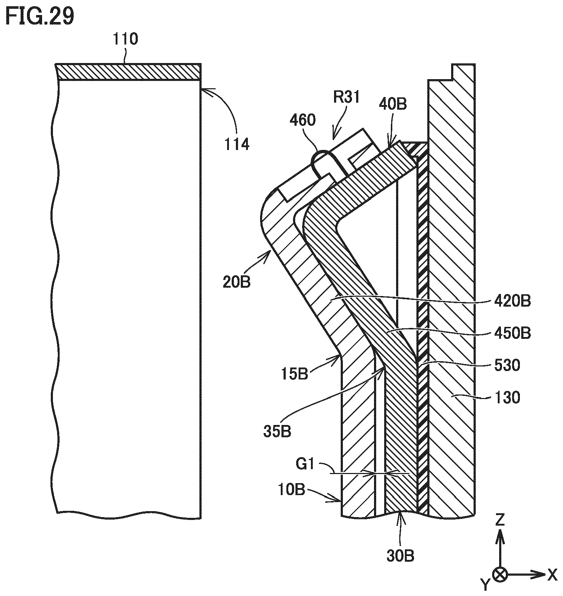

Fig. 28 is a perspective view showing a configuration of each of current collectors included in the secondary battery according to the third embodiment. Fig. 29 is a cross sectional view of the current collectors shown in Fig. 28 along XXIX-XXIX.

As shown in Fig. 29, a current collector 420B (first member) has a first region 10B extending along sealing plate 130, a second region 20B extending in a direction intersecting sealing plate 130, and an intermediate portion 15B (first folded portion) located between first region 10B and second region 20B. A current collector 450B (second member) has a third region 30B extending along sealing plate 130, a fourth region 40B extending in the direction intersecting sealing plate 130, and an intermediate portion 35B (second folded portion) located between third region 30B and fourth region 40B.

First region 10B of current collector 420B and third region 30B of current collector 450B are disposed to overlap with each other. First region 10B is located on the electrode assembly 200 side with respect to third region 30B. Positive electrode tab groups 250, 280 are connected to first region 10B of current collector 420B.

Each of second region 20B of current collector 420B and fourth region 40B of current collector 450B has a substantially L-shape. Each of second region 20B and fourth region 40B is inclined with respect to the YZ plane and folded back so as to have a protruding shape toward case main body 110.

Second region 20B constitutes a first protruding region protruding to the electrode assembly 200 side with respect to first region 10B, and fourth region 40B constitutes a second protruding region protruding to the electrode assembly 200 side with respect to third region 30B. Second region 20B and fourth region 40B are disposed to overlap with each other. Thus, an abutment region R31 in which current collector 420B and current collector 450B overlap with each other is formed.

An end portion (tip portion) of fourth region 40B (second protruding region) on the side far away from third region 30B is in contact with insulating member 530.

In each of first region 10B and third region 30B, a clearance G1 is preferably provided between current collector 420B and current collector 450B. Thus, in abutment region R31, the current collectors are facilitated to be preferentially brought into contact with each other. Further, a reaction force resulting from folding of the electrode tabs acts on current collector 420B, with the result that current collector 420B and current collector 450B can be brought into close contact with each other. The size (X direction) of clearance G1 is preferably about 2.0 mm or less, and is more preferably about 1.0 mm or less.

Current collector 420B and current collector 450B can be electrically connected by wire bonding or ribbon bonding using connection member 460 (third member). Also in secondary battery 1 according to the present embodiment, the application (laser welding) of the high-energy ray for directly connecting the base members (current collector 420B and current collector 450B) is not required, with the result that it is possible to obtain secondary battery 1 having high reliability while suppressing decreased manufacturing efficiency as in the first embodiment.

### (Fourth Embodiment)

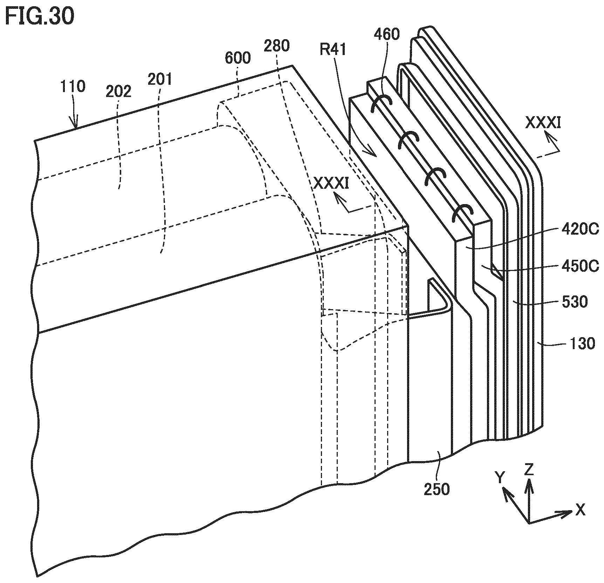

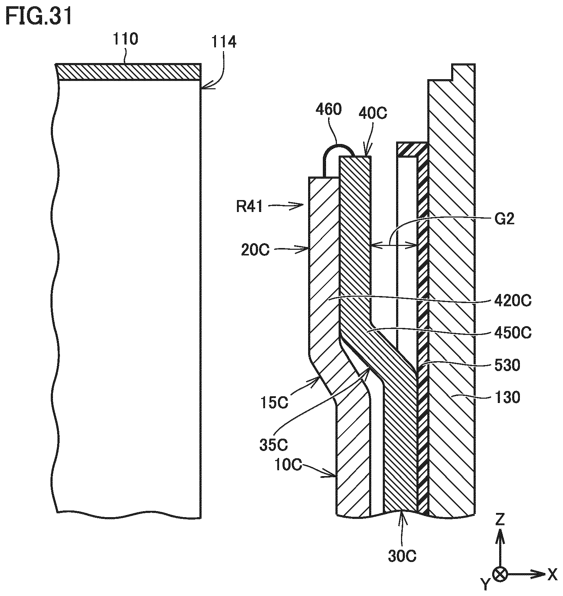

Fig. 30 is a perspective view showing a configuration of each of current collectors included in the secondary battery according to the fourth embodiment. Fig. 31 is a cross sectional view of the current collectors shown in Fig. 30 along XXXI-XXXI.

As shown in Fig. 31, a current collector 420C (first member) has a first region 10C and a second region 20C each extending along sealing plate 130, and an intermediate portion 15C located between first region 10C and second region 20C. A current collector 450C (second member) has a third region 30C and a fourth region 40C each extending along sealing plate 130, and an intermediate portion 35C located between third region 30C and fourth region 40C.

In each of first region 10C of current collector 420C and fourth region 40C of current collector 450C, an abutment region R41 in which current collector 420C and current collector 450C are in abutment with each other in the first direction (X direction) is formed.

Abutment region R41 includes an abutment surface between current collector 420C and current collector 450C. Abutment region R41 expands on a plane intersecting the first direction (X direction). Abutment region R41 extends in each of the Y direction and the Z direction. Abutment region R41 is preferably disposed along sealing plate 130.

The size (X direction) of clearance G2 is preferably about 0.1 mm or more, is more preferably about 0.5 mm or more, and is further preferably about 1.0 mm or more, for example, The size (X direction) of clearance G2 is preferably about 5.0 mm or less, is more preferably about 2.0 mm or less, and is further preferably about 1.0 mm or less, for example.

Also in the present embodiment, current collector 420C and current collector 450C can be electrically connected by wire bonding or ribbon bonding using connection member 460 (third member).

### (Fifth Embodiment)

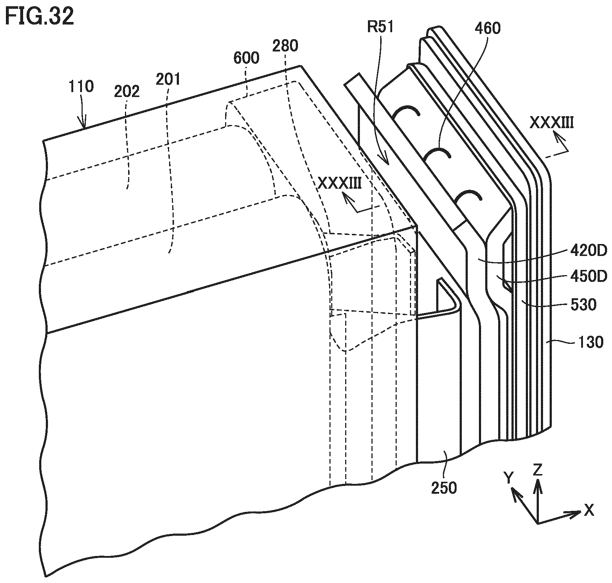

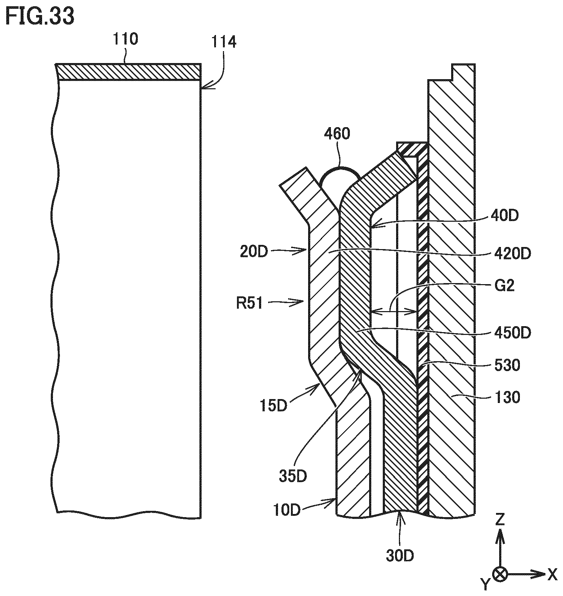

Fig. 32 is a perspective view showing a configuration of each of current collectors included in the secondary battery according to the fifth embodiment. Fig. 33 is a cross sectional view of the current collectors shown in Fig. 32 along XXXIII-XXXIII.

As shown in Fig. 33, a current collector 420D (first member) has a first region 10D extending along sealing plate 130, a second region 20D, and an intermediate portion 15D located between first region 10D and second region 20D. A current collector 450D (second member) has a third region 30D extending along sealing plate 130, a fourth region 40D, and an intermediate portion 35D located between third region 30D and fourth region 40D.

In each of second region 20D of current collector 420D and fourth region 40D of current collector 450D, an abutment region R51 in which current collector 420D and current collector 450D are in abutment with each other in the first direction (X direction) is formed.

At an end portion of abutment region R51, current collector 420D and current collector 450D are bent in directions so as to be separated from each other. Abutment region R51 includes an abutment surface between current collector 420D and current collector 450D. Abutment region R51 expands on a plane intersecting the first direction (X direction). Abutment region R51 extends in each of the Y direction and the Z direction. Abutment region R51 is preferably disposed along sealing plate 130.

In fourth range 40D, a clearance G2 is provided between current collector 450D and insulating member 530.

Also in the present embodiment, current collector 420D and current collector 450D can be electrically connected by wire bonding or ribbon bonding using connection member 460 (third member).

### (Sixth Embodiment)

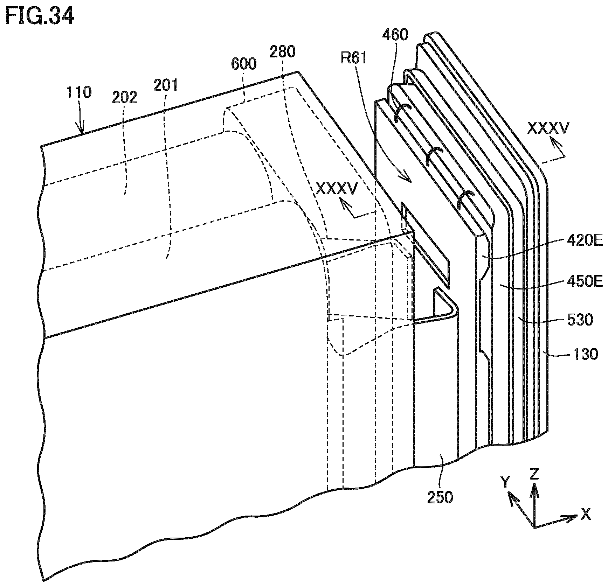

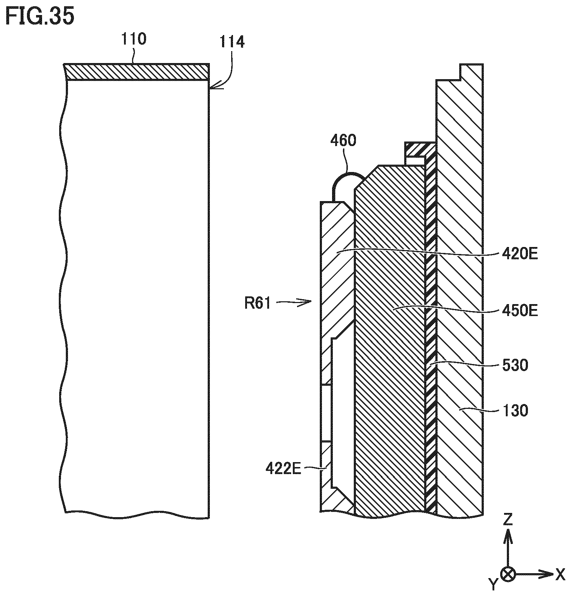

Fig. 34 is a perspective view showing a configuration of each of current collectors included in the secondary battery according to the sixth embodiment. Fig. 35 is a cross sectional view of the current collectors shown in Fig. 34 along XXXV-XXXV.

As shown in Fig. 35, a current collector 450E (second member) in the present embodiment has a thicker thickness in the X direction than that of a current collector 420E (first member).

For example, the thickness of current collector 450E is preferably about 1.2 times or more, more preferably about 1.5 times or more, and further preferably about 2.0 times or more as large as the thickness of current collector 420E. It should be noted that for the comparison between the thicknesses of the current collectors, it is preferable to compare the thicknesses of base portions (portions each having a general thickness with no irregularities being formed therein) of the current collectors.

A fuse portion 422E is provided in current collector 420E. When the current collector generates an excessive amount of heat, the current collector is melted first at fuse portion 422E of the positive electrode current collector that is located as far as possible from the insulating member.

Also in the present embodiment, as with the fifth embodiment, a separation portion that separates current collector 420E and current collector 450E from each other is formed at an end portion of an abutment region R61.

Also in the present embodiment, current collector 420E and current collector 450E can be electrically connected by wire bonding or ribbon bonding using connection member 460 (third member).

### (Seventh Embodiment)

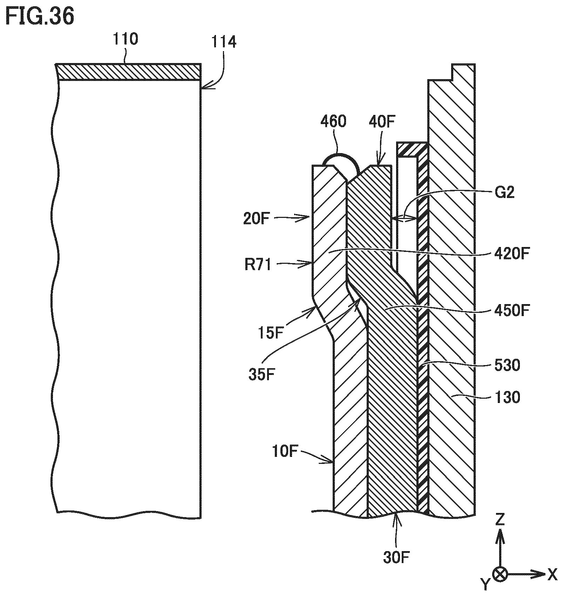

Fig. 36 is a cross sectional view showing a configuration of each of current collectors included in the secondary battery according to the seventh embodiment.

As shown in Fig. 36, a current collector 420F (first member) has a first region 10F and a second region 20F each extending along sealing plate 130, and an intermediate portion 15F located between first region 10F and second region 20F. A current collector 450F (second member) has a third region 30F and a fourth region 40F each extending along sealing plate 130, and an intermediate portion 35F located between third region 30F and fourth region 40F.

In each of second region 20F of current collector 420F and fourth region 40F of current collector 450F, an abutment region R71 in which current collector 420F and current collector 450F are in abutment with each other in the first direction (X direction) is formed. It should be noted that the thickness of current collector 450F is more than the thickness of current collector 420F. It should be noted that for the comparison between the thicknesses of the current collectors, it is preferable to compare the thicknesses of base portions (portions each having a general thickness with no irregularities being formed therein) of the current collectors.

Also in the present embodiment, as with each of the fifth embodiment and the sixth embodiment, a separation portion that separates current collector 420F and current collector 450F from each other is formed at an end portion of abutment region R71.

Abutment region R71 includes an abutment surface between current collector 420F and current collector 450F. Abutment region R71 expands on a plane intersecting the first direction (X direction). Abutment region R71 extends in the Y direction and the Z direction. Abutment region R71 is preferably disposed along sealing plate 130.

In fourth region 40F, a clearance G2 is provided between current collector 450F and insulating member 530.

Also in the present embodiment, current collector 420E and current collector 450E can be electrically connected by wire bonding or ribbon bonding using connection member 460 (third member).

It should be noted that each of sealing plates 120, 130 preferably has a pair of long end sides disposed in parallel with each other and short end sides disposed in parallel with each other and shorter than the pair of long end sides. Here, a direction in which each of the long end sides extends corresponds to the long-side direction thereof.

### (Exemplary Configuration of Connection Member 460)

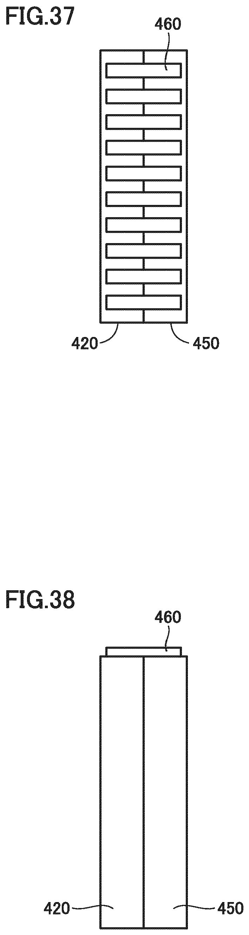

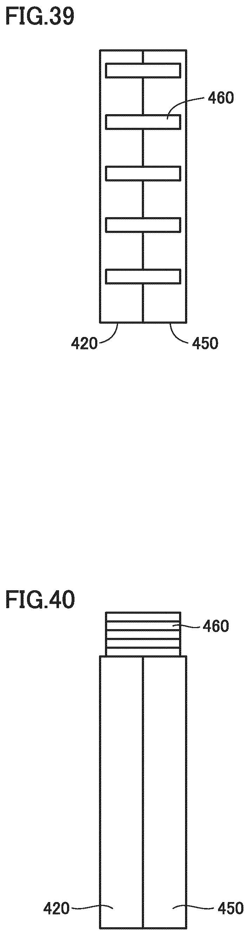

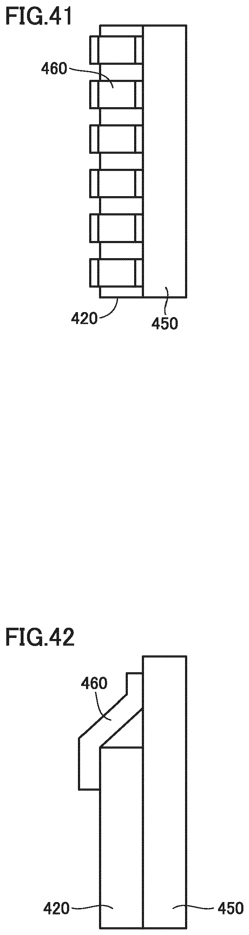

Next, exemplary configurations of connection member 460 (third member) will be described with reference to Figs. 37 to 42. Fig. 37 (top view) and Fig. 38 (side view) show a first example, Fig. 39 (top view) and Fig. 40 (side view) show a second example, and Fig. 41 (top view) and Fig. 42 (side view) show a third example.

In the example shown in Figs. 37 and 38, a plurality of connection members 460 (wires or ribbons) are arranged at equal intervals.

Also in the examples shown in Figs. 39 and 40, a plurality of connection members 460 (ribbons) are arranged at equal intervals, but the intervals are larger than those in the example of Figs. 37 and 38. In the examples of Figs. 39 and 40, connection members 460 (ribbons) each in the form of a plurality of layers (for example, two to five layers) are stacked.

In the example of Figs. 41 and 42, connection members 460 (wires or ribbons) are each formed in the form of a loop.

Thus, each of connection members 460 can take various forms. The scope of the present technology is not limited to those illustrated in Figs. 37 to 42.

Connection member 460 may be constituted of a single member or may be constituted of a plurality of members. When connection member 460 is constituted of a single member, a processing cycle time and manufacturing cost can be reduced. When connection member 460 is constituted of a plurality of separate members, a degree of freedom in the shape of connection member 460 is increased, and the connection can be attained with low energy. Moreover, it is possible to reduce the size of a jig used at the time of joining.

Since connection member 460 serves as an electrical conduction path, connection member 460 preferably has an electrical conduction area by which predetermined rapid charging can be handled. For example, connection member 460 preferably has an electrical conduction area by which charging corresponding to about 1 C (more preferably, corresponding to about 4 C) can be permitted. The expression "corresponding to 1 C" can be defined as a magnitude of current by which the theoretical capacity of the battery is completely charged (or discharged) in one hour. Further, the expression "corresponding to 4 C" can be defined as a magnitude of current "four times" as large as the magnitude of current "corresponding to 1 C" (1/4 times in terms of charging/discharging time).

In the case where connection member 460 is constituted of a wire (line-shaped member), as one example, the wire may have a diameter φ of about 18 µm or more and 80 µm or less, the material thereof may be aluminum or copper, the number of the wires may be about 1 or more and 3000 or less, and a pitch when the wires are arranged at equal intervals may be about 0.5 mm or more and 2.5 mm or less.

In the case where connection member 460 is constituted of a ribbon (strip-shaped member), as one example, the width of the ribbon (substantially rectangular cross section) may be about 100 µm or more and 2000 µm or less, the thickness thereof may be about 20 µm or more and 500 µm or less, the material thereof may be aluminum or copper, the number of the ribbons may be about 1 or more and 50 or less, a pitch when the ribbons are arranged at equal intervals may be about 0.5 mm or more and 2.5 mm or less, and the number of the stacked layers may be about 1 or more and 5 or less.

Each of the numerical values described above is merely an example, and the scope of the present technology is not limited thereto.

In each of the above-described examples of the first to seventh embodiments, the configuration of connection member 460 in positive electrode current collector 400B has been described, but the connection configuration by connection member 460 can also be provided in negative electrode current collector 400A. The connection structure using connection member 460 may be applied to both negative electrode current collector 400A and positive electrode current collector 400B, or the connection structure using connection member 460 may be applied to only one of negative electrode current collector 400A and positive electrode current collector 400B.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A secondary battery comprising:
an electrode assembly (200) including a positive electrode (240) and a negative electrode (210);
a case (100) that accommodates the electrode assembly (200), the case (100) including a case main body (110) provided with an opening and a sealing plate (120, 130) that seals the opening;
an electrode terminal (300) provided on an outer surface of the sealing plate (120, 130); and
a current collecting portion (400) that electrically connects the electrode assembly (200) and the electrode terminal (300), wherein
the current collecting portion (400) includes
a first member (430) having electric conductivity, the first member (430) being joined to the electrode assembly (200),
a second member (440) having electric conductivity, the second member (440) being fixed on an inner surface of the sealing plate (120, 130), the second member (440) being joined to the electrode terminal (300), and
a third member (460) having electric conductivity, the third member (460) being constituted of a member different from the first member (430) and the second member (440), the third member (460) electrically connecting the first member (430) and the second member (440).

2. The secondary battery according to claim 1, wherein the third member (460) is constituted of a line-shaped member or strip-shaped member having electric conductivity.

3. The secondary battery according to claim 1 or 2, wherein the case (100) has a substantially rectangular parallelepiped shape.

4. The secondary battery according to any one of claims 1 to 3, wherein
the case main body (110) is provided with a first opening (113) and a second opening (114) respectively located on both sides of the case main body (110) in a first direction,
the sealing plate (120, 130) includes a first sealing plate (120) and a second sealing plate (130) that respectively seal the first opening (113) and the second opening (114),
the electrode terminal includes a positive electrode terminal (302) or a negative electrode terminal (301) provided on an outer surface of one of the first sealing plate (120) and the second sealing plate (130), and
the current collecting portion (400) is provided between the electrode assembly (200) and the positive electrode terminal (302) or the negative electrode terminal (301).

5. The secondary battery according to any one of claims 1 to 4, wherein the third member (460) has an electrical conduction area by which charging corresponding to 1 C is able to be permitted.

6. The secondary battery according to any one of claims 1 to 5, wherein the third member (460) is constituted of a single member.

7. The secondary battery according to any one of claims 1 to 5, wherein the third member (460) is constituted of a plurality of members.

8. A method of manufacturing a secondary battery, the method comprising:
inserting an electrode assembly (200) including a positive electrode (240) and a negative electrode (210) into a case main body (110) via an opening;
providing an electrode terminal (300) on an outer surface of a sealing plate (120, 130);
sealing the opening (113, 114) by the sealing plate (120, 130); and
electrically connecting the electrode assembly (200) and the electrode terminal (300) via a current collecting portion (400), wherein
the electrically connecting the electrode assembly (200) and the electrode terminal (300) includes
joining a first member (430) to the electrode assembly, the first member (430) having electric conductivity,
fixing a second member (440) on an inner surface of the sealing plate (120, 130) and joining the second member (440) to the electrode terminal (300), the second member (440) having electric conductivity, and
electrically connecting the first member (430) and the second member (440) via a third member (460) constituted of a member different from the first member (430) and the second member (440), the third member (460) having electric conductivity.

9. The method of manufacturing a secondary battery according to claim 8, wherein the third member (460) is constituted of a line-shaped member or strip-shaped member having electric conductivity.

10. The method of manufacturing a secondary battery according to claim 8 or 9, wherein a case (100) including the case main body (110) and the sealing plate (120, 130) has a substantially rectangular parallelepiped shape.

11. The method of manufacturing a secondary battery according to any one of claims 8 to 10, wherein
the case main body (110) is provided with a first opening (113) and a second opening (114) respectively located on both sides of the case main body (110) in a first direction,
the sealing plate (120, 130) includes a first sealing plate (120) and a second sealing plate (130) that respectively seal the first opening (113) and the second opening (114),
the electrode terminal (300) includes a positive electrode terminal (302) or a negative electrode terminal (301) provided on an outer surface of one of the first sealing plate (120) and the second sealing plate (130), and
the current collecting portion (400) is provided between the electrode assembly (200) and the positive electrode terminal (302) or the negative electrode terminal (301).

12. The method of manufacturing a secondary battery according to any one of claims 8 to 11, wherein the electrically connecting the first member (430) and the second member (440) via the third member (460) is performed after the electrode assembly (200) is inserted into the case main body (110).

13. The method of manufacturing a secondary battery according to any one of claims 8 to 12, wherein the third member (460) has an electrical conduction area by which charging corresponding to 1 C is able to be permitted.

14. The method of manufacturing a secondary battery according to any one of claims 8 to 13, wherein the third member (460) is constituted of a single member.

15. The method of manufacturing a secondary battery according to any one of claims 8 to 13, wherein the third member (460) is constituted of a plurality of members.
